# EUROPÄISCHE PATENTSCHRIFT

(11) **EP 0 351 591 B1**
(45) Veröffentlichungstag und Bekanntmachung des Hinweises auf die Patenterteilung: **06.10.1993**
(21) Anmeldenummer: 89111534.7
(22) Anmeldetag: 24.06.1989
(51) Int. Cl.: A01N 43/58

(54) **2-tert.-Butyl-4-chlor-5-(4-tert.-butylbenzylthio)-3-(2H) -pyridazinon zur Bekämpfung von Schnecken**
2-Tert.-butyl-4-chloro-5-(4-tert.-butyl-benzylthio)-3(2H)-pyridazinone for controlling snails
2-Tert.-butyl-4-chloro-5-(4-tert.-butyl-benzylthio)-3(2H)-pyridazinone pour lutter contre les limaces et les escargots

(30) Priorität: 16.07.1988 DE 3824211
(43) Veröffentlichungstag der Anmeldung: 24.01.1990
(73) Patentinhaber: BASF Aktiengesellschaft, 67063 Ludwigshafen (DE)
(72) Erfinder: Leyendecker, Joachim, Dr., D-6802 Ladenburg (DE); Künast, Christoph, Dr., D-6701 Otterstadt (DE); Hofmeister, Peter, Dr., D-6730 Neustadt (DE)

(56) Entgegenhaltungen:
- EP-A- 0 134 439
- CHEMICAL ABSTRACTS, Band 93, Nr. 19, 10. November 1980, Seite 192, Spalte 1, Zusammenfassung Nr. 181042d, Columbus, Ohio, US; & JP-A-80 089 205 (IHARA CHEMICAL INDUSTRY) 05-07-1980
- CHEMICAL ABSTRACTS, Band 107, Nr. 21, 23. November 1987, Seite 288, Spalte 2, Zusammenfassung Nr. 193071h, Columbus, Ohio, US; & JP-A-62 175 406 (HOKKO CHEMICAL INDUSTRY) 01-08-1987

## Beschreibung

Die Erfindung betrifft die Verwendung von 2-tert.-Butyl-4-chlor-5-(4-tert.-butylbenzylthio)-3(2H)-pyridazinon I 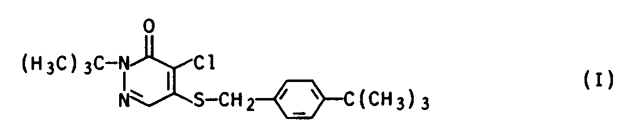
zur Bekämpfung von Schnecken.

Schnecken sind in gemäßigten, subtropischen und tropischen Pflanzenkulturen bedeutende Schädlinge. Aus verschiedenen Gründen, z.B. wegen Quarantänevorschriften (Parella, M.P., Robb, K.; Morishita, P.: Calif. Agriculture 1985, Jan./Feb., 6-8) gewinnt Schneckenbekämpfung an Bedeutung.

Aus der EP-A-134 439 ist bereits bekannt, daß 2-tert.-Butyl-4-chlor-5-(4-tert.-butylbenzylthio)-3(2H)-pyridazinon u.a. ausgezeichnete insektizide und akarizide Eigenschaften besitzt. Eine molluskizide Wirkung dieser Substanz ist dieser Schrift nicht zu entnehmen.

Der Erfindung lag nun die Aufgabe zugrunde, ein neues Mittel sowie ein Verfahren zur Bekämpfung von Schnecken zu finden.

Erfindungsgemäß erhält man ein gegen Schnecken wirksames z.B. als Streumittel formulierbares Präparat durch die Verwendung des eingangs definierten 3(2H)-Pyridazinonderivates I.

Das 3(2H)-Pyridazinonderivat I besitzt ausgeprägte molluskizide Eigenschaften sowohl bei Nackt- als auch bei Gehäuseschnecken und eignet sich hervorragend zur Schneckenbekämpfung in landwirtschaftlichen und gärtnerischen Pflanzenkulturen.

Die Herstellung des 3(2H)-Pyridazinonderivates I kann wie in EP-A-134 439 beschrieben erfolgen.

Geeignete Formulierungen für Molluskizide sind z.B. in GB-A-2 087 723, EP-A-190 595, DE-A-35 03 608, DE-A-37 06 358 und DE-A-35 00 468 beschrieben. Sie enthalten im allgemeinen ein Trägermaterial, einen Fraßstoff bzw. ein Lockmittel, ein Bindemittel und den Wirkstoff sowie ggf. übliche Zusatzstoffe wie Konservierungsmittel, Farbstoffe, Repellents, Wasser, organische Solventien, oberflächenaktive Stoffe und den Wirkstoff.

Als (feste) Trägerstoffe kommen in Frage z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen z.B. gebrochene und fraktionierte natürliche Gesteine wie Calcit, Marmor, Bims, Sepiolith, Dolomit, synthetische Granulate aus anorganischen und organischen Mehlen sowie Granulate aus organischem Material wie Sägemehl, Kokosnußschalen, Maiskolben und Tabakstengel, in Betracht.

Als Fraßstoffe können alle üblichen in derartigen Ködern verwendbaren Futtersubstanzen enthalten sein. Vorzugsweise in Betracht kommen gemahlenes Getreide, wie z.B. Weizenmehl, Weizenschrot und Gerstenschrot, ferner Sojaschrot, Kleie, Reisstärke, Fischmehl, Fleischmehl und Melasse. Es kann entweder nur ein Fraßstoff oder auch ein Gemisch aus mehreren Fraßstoffen vorhanden sein.

Als Bindemittel können alle üblichen für derartige Zwecke verwendbaren Kleber vorhanden sein. Vorzugsweise infrage kommen Methylcellulose, Zucker, Dextrin, Stärke, Alginate, Glycole, Polyvinylpyrrolidon, Lingninsulfonat, Gummiarabicum, Polyvinylalkohol und Polyvinylacetat. Es können ein oder mehrere Bindemittel enthalten sein.

Als Beispiele für gegebenenfalls vorhandene Konservierungsmittel seien 2-Hydroxybiphenyl, Sorbinsäure, p-Hydroxybenzaldehyd, p-Hydroxybenzoesäuremethylester, Benzaldehyd, Benzoesäure, p-Hydroxybenzoesäurepropylester und p-Nitrophenol genannt.

Als Farbstoffe, die als Zusatzstoffe in Betracht kommen, um Vögel und Säugetiere abzuschrecken, seien anorganische Pigmente, wie Eisenoxid, Titandioxid und Ferrocyanblau und organische Farbstoffe, wie Anthrachinon-, Azo- und Metallphthalocyaninfarbstoffe genannt.

Als Stoffe, die einen Lockreiz auf Bodenschädlinge ausüben, können alle üblichen für diesen Zweck geeigneten Komponenten verwendet werden. Beispielhaft genannt seien Anis und Anisöl.

Als Repellents, die eine abweisende Wirkung auf warmblütige Lebewesen, wie Hunde und Igel, ausüben, können alle üblichen für diesen Zweck geeigneten Komponenten eingesetzt werden. Beispielhaft genannt sei Nonylsäurevanillylamid.

Als organische Solventien kommen alle üblicherweise für die Herstellung von Ködern verwendbaren organischen Lösungsmittel in Frage. Vorzugsweise in Betracht kommen niedrig siedende organische Solventien, wie Methanol, Ethanol, Butanol und Methylenchlorid.

Als geeignete oberflächenaktive Stoffe kommen in Betracht nicht-ionische Wirkstoffe, wie Kondensationsprodukte von Polyalkylenoxiden und Alkylphenolen und Fettsäurepolyoxyalkylenestern, z.B. Octylphenoxypolyoxyethanol; kationische Wirkstoffe wie quartäre Ammoniumsalze, z.B. Cetyltrimethylammoniumchlorid oder Cetylpyridiniumchlorid und anionische Wirkstoffe, wie die Natriumsalze von langkettigen Alkylsulfaten, z.B. Natriumlaurylsulfat, Salze von Alkylarylsulfaten, das Natriumsalz der Desoxychiolsäure, das Natriumsalz der Taurocholsäure, das Natriumsalz der Tauroglykocholsäure.

Eine andere bevorzugte Anwendungsform ist die Saatgutbeizung mit einer für Beizungen üblichen Formulierung.

Der Wirkstoffgehalt in den einzelnen Anwendungsformen kann in weiten Grenzen variieren, z. B. im Bereich von 0,001 bis 90, insbesondere 0,5 bis 50, vorzugsweise 1 bis 10 Gew.% bei Kornformulierungen und 10 bis 90 Gew.% bei Saatgutbeizen.

Die Aufwandmenge an Wirkstoff I liegt i.a. bei ca. 0,3 bis 30 kg/ha, vorzugsweise 1 bis 10 kg/ha.

Die molluskizide Wirkung der erfindungsgemäßen Mittel erstreckt sich auf landbewohnende und amphibische Schnecken, z. B. solche der Gattungen Deroceras (Agriolimax), Limax, Helix, Helicogona, Cepaea, Milax, Lymnaea (Galba), Achatina, Theba, Cochlicella, Helicarion, Vaginulus. Zu den Schadschnecken gehören z. B. die Nacktschnecken (slugs) Arion ater, A. lusitanicus, A. hortenis, Agriolimax reticulatus, Limax flavus, L. maximus, Milax gagates, Mariella dursumierei, Helicarion salius, Vaginula hedleyi, Pamarion pupillaris sowie die Gehäuseschnecken (snails) Helix aspersa spp., Cepaea nemoralis, Theba pisana, Achatina fulica, A. zanzibarica, Bradybaena spp., Cochlodina spp., Helicella spp., Euomphalia spp.

### Formulierungsbeispiel 1

In einem Mischer wurden 2 kg 2-tert.-Butyl-4-chlor-5-(4-tert.-butylbenzylthio)-3(2H)-pyridazinon, 8 kg Calciumstearat, 0,2 kg Natriumbenzoat, 20 kg Kreide, 0,5 kg blauer Farbstoff und 63,3 kg Weizenkleie gemischt. Diese Mischung wurde anschließend in einem Kneter mit ausreichend Wasser befeuchtet und geknetet. Danach wurde die feuchte Mischung in einem Extruder zu Schneckenködergranulat mit einem Durchmesser von 3 mm geformt und bei maximal 60°C getrocknet.

### Formulierungsbeispiel 2

### Zur Herstellung einer Saatgutbeize wurden gemischt:

480 g 2-tert.-Butyl-4-chlor-5-(4-tert.-butylbenzylthio)-3(2H)-pyrdazinon
20 g handelsübliches Phenolsulfonsäure-Harnstoff-Formaldehyd-Kondensat
40 g Ethylen-Propylen-Blockcopolymerisat mit einem Molgewicht von 10.000
2 g Xanthan-Gummi
0,5 g Rhodamin FB
80 g 1,2-Propylenglykol
5 g Silikon-Antischaummittel
und mit Wasser auf 1 Liter aufgefüllt.

### Anwendungsbeispiele

Petrischalen (Durchmesser 94 mm) wurden mit je 5 Schnecken besetzt und ein Salatblatt (=1 g) zugefügt, das vorher in eine Wirkstofflösung in angegebener Konzentration getaucht wurde. Alle Versuche wurden im Klimaschrank bei 20°C, L/D (Licht/Dunkelheit) = 18:6 Stunden aufgestellt. Nach 4 Tagen wurde die Mortalität der Schnecken bestimmt.

Die Testergebnisse sind in Tabellen A und B zusammengestellt.

**Tabelle A**

| Arion hortensis (Garten-Wegschnecke) 2 - 3 cm Körperlänge | | |
|---|---|---|
| Verbindung | Konzentration % | Anzahl toter Schnecken |
| I | 0,1 | 5 |
| | 0,04 | 5 |
| | 0,02 | 5 |
| | 0,01 | 5 |
| unbehandelt | - | 0 |

**Tabelle B**

| Deroceras reticulatum (Acker-Schnecke) 2 - 3 cm Körperlänge | | |
|---|---|---|
| Verbindung | Konzentration % | Anzahl toter Schnecken |
| I | 0,1 | 5 |
| | 0,04 | 5 |
| | 0,02 | 0 |
| | 0,01 | 0 |
| unbehandelt | - | 0 |

## Patentansprüche

1. Verwendung von 2-tert.-Butyl-4-chlor-5-(4-tert.-butylbenzylthio)-3(2H)-pyridazinon I 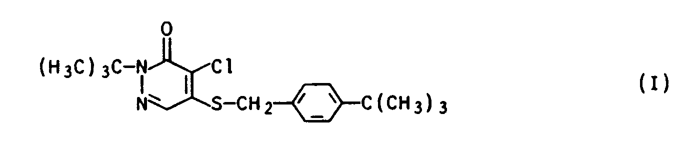 zur Bekämpfung von Mollusken.

2. Verfahren zur Bekämpfung von Mollusken, dadurch gekennzeichnet, daß man die vor Mollusken zu schützenden Pflanzen und/oder ihre Umgebung mit 2-tert.-Butyl-4-chlor-5-(4-tert.-butylbenzylthio)-3(2H)-pyridazinon I 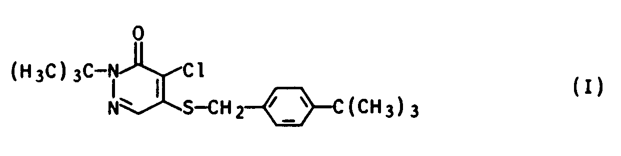 behandelt.

3. Verfahren zur Herstellung molluskizider Mittel, dadurch gekennzeichnet, daß man 2-tert.-Butyl-4-chlor-5-(4-tert.-butylbenzylthio)-3(2H)-pyridazinon I mit einem festen Trägermaterial, einem Fraßstoff bzw. einem Lockmittel sowie üblichen inerten Zusatzstoffen vermischt.

4. Schneckenfraßköder, enthaltend ein Trägermaterial, einen Fraßstoff bzw. ein Lockmittel, ein Bindemittel sowie übliche Zusatzstoffe, gekennzeichnet durch den Gehalt an 2-tert.-Butyl-4-chlor-5-(4-tert.-butylbenzylthio)-3(2H)-pyridazinon I.

5. Verfahren zum Schutz von landwirtschaftlichen und gärtnerischen Kulturpflanzen gegen Mollusken, dadurch gekennzeichnet, daß man die zu schützenden Pflanzen oder ihre Umgebung mit Mitteln behandelt, die 2-tert.-Butyl-4-chlor-5-(4-tert.-butylbenzylthio)-3(2H)-pyridazinon I enthalten.

6. Saatgutbeizmittel zum Schutz von Saatgut landwirtschaftlicher und gärtnerischer Kulturpflanzen gegen Schneckenfraß, enthaltend 20 Gew.-Teile eines Phenolsulfonsäure-Harnstoff-Formaldehyd-Kondensats, 40 Gew.-Teile eines Ethylen-Propylen-Blockcopolymerisats mit einem Molgewicht von 10.000, 2 Gew.-Teile Xanthan-Gummi, 0,5 Gew.-Teile Rhodamin FB, 80 Gew.-Teile 1,2-Propylenglycol und 5 Gew.-Teile Silikon-Antischaummittel, gekennzeichnet durch den Gehalt an 480 Gew.-Teile 2-tert.-Butyl-4-chlor-5-(4-tert.-butylbenzylthio)-3-(2H)-pyridazinon I.

7. Verfahren zum Schutz von Saatgut von landwirtschaftlichen und gärtnerischen Kulturpflanzen gegen Mollusken, dadurch gekennzeichnet, daß man das Saatgut mit einer für die Beizung üblichen Formulierung enthaltend 10 bis 90 Gew.-% an 2-tert.-Butyl-4-chlor-5-(4-tert.-butylbenzylthio)-3(2H)-pyridazinon I behandelt.

## Claims

1. Use of 2-tert-butyl-4-chloro-5-(4-tert-butylbenzylthio)-3(2H)-pyridazinone I 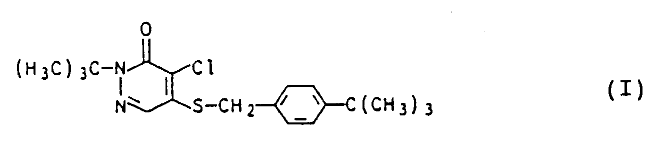 for controlling molluscs.

2. A method for controlling molluscs, wherein the plants to be protected from molluscs, or the environment of said plants, are or is treated with 2-tert-butyl-4-chloro-5-(4-tert-butylbenzylthio)-3(2H)-pyridazinone I

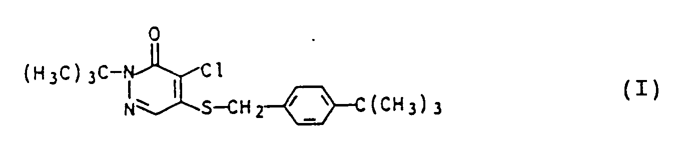

3. A process for the preparation of a molluscicidal agent, wherein 2-tert-butyl-4-chloro-5(4-tert-butylbenzylthio)-3(2H)-pyridazinone I is mixed with a solid carrier, an edible substance or a lure and conventional inert additives.

4. An edible bait for slugs and snails, containing a carrier, an edible substance or a lure, a binder and conventional additives, which comprises a content of 2-tert-butyl-4-chloro-5-(4-tert-butylbenzylthio)-3(2H)-pyridazinone I.

5. A method for protecting agricultural and horticultural crops from molluscs, wherein the plants to be protected, or their environment, are or is treated with an agent which contains 2-tert-butyl-4-chloro-5-(4-tert-butylbenzylthio)-3(2H)-pyridazinone I.

6. A seed dressing for protecting seed of agricultural and horticultural crops from being eaten by slugs and snails, containing 20 parts by weight of a phenolsulfuric acid/urea/formaldehyde condensate, 40 parts by weight of an ethylene/propylene block copolymer having a molecular weight of 10,000, 2 parts by weight of xanthan gum, 0.5 part by weight of Rhodamine FB, 80 parts by weight of 1,2-propylene glycol and 5 parts by weight of a silicone antifoam, which comprises a content of 480 parts by weight of 2-tert-butyl-4-chloro-5-(4-tert-butylbenzylthio)-3(2H)-pyridazinone I.

7. A method for protecting seed of agricultural and horticultural crops from molluscs, wherein the seed is treated with a formulation which is conventionally used for dressing and contains from 10 to 90% by weight of 2-tert-butyl-4-chloro-5-(4-tert-butylbenzylthio)-3(2H)-pyridazinone I.

## Revendications

1. Utilisation de la 2-tert-butyl-4-chloro-5-(4-tert-butylbenzylthio)-3(2H)-pyridazinone I 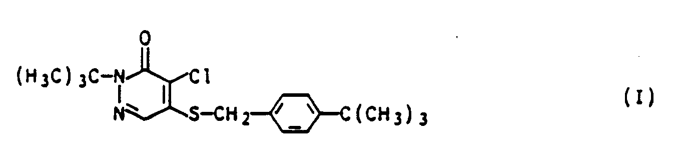 pour la lutte contre les mollusques.

2. Procédé pour combattre les mollusques, caractérisé en ce que l'on traite les plantes à protéger contre les mollusques et/ou leur environnement par de la 2-tert-butyl-4-chloro-5-(4-tert-butylbenzylthio)-3(2H)-pyridazinone I

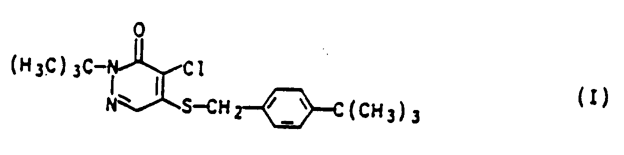

3. Procédé pour la préparation de produits mollusquicides, caractérisé en ce que l'on mélange la 2-tert-butyl-4-chloro-5-(4-tert-butylbenzylthio)-3(2H)-pyridazinone I avec un véhicule solide, un aliment ou un appât et des additifs inertes usuels.

4. Appât alimentaire pour gastéropodes, contenant un véhicule, un aliment ou un appât, un liant et des additifs usuels et caractérisé en ce qu'il contient de la 2-tert-butyl-4-chloro-5-(4-tert-butylbenzylthio)-3(2H)-pyridazinone I.

5. Procédé pour protéger des végétaux cultivés dans l'agriculture et l'horticulture contre les mollusques, caractérisé en ce que l'on traite les végétaux à protéger ou leur environnement par des produits contenant de la 2-tert-butyl-4-chloro-5-(4-tert-butyl-benzylthio)-3(2H)-pyridazinone I.

6. Désinfectant pour semences, pour la protection des semences de végétaux cultivés dans l'agriculture et l'horticulture contre la voracité des gastéropodes, contenant 20 parties en poids d'un condensat acide phénol-sulfonique-urée-formaldéhyde, 40 parties en poids d'un copolymère séquencé éthylène-propylène de poids moléculaire 10 000, 2 parties en poids de gomme de xanthane, 0,5 partie en poids de rhodamine FB, 80 parties en poids de 1,2-propylène-glycol et 5 parties en poids d'un silicone anti-mousse, caractérisé en ce qu'il contient 480 parties en poids de 2-tert-butyl-4-chloro-5-(4-tert-butylbenzylthio)-3(2H)-pyridazinone I.

7. Procédé pour protéger les semences des végétaux cultivés dans l'agriculture, l'horticulture contre les mollusques, caractérisé en ce que l'on traite les semences par une composition usuelle pour la désinfection, contenant de 10 à 90 % en poids de 2-tert-butyl-4-chloro-5-(4-tert-butylbenzylthio)-3(2H)-pyridazinone I.
